# FASCICULE DE BREVET EUROPEEN

(11) **EP 1 350 742 B1**
(45) Date de publication et mention de la délivrance du brevet: **29.12.2010**
(21) Numéro de dépôt: 03290042.5
(22) Date de dépôt: 08.01.2003
(51) Int. Cl.: B65G 21/04, E21F 13/08

(54) **Installation mobile de convoyage et son procédé mobile de convoyage de déplacement**
Mobile Fördervorrichtung und Verfahren zum Verschieben dieser Fördervorrichtung
Mobile transport system and method for moving the mobile transport system

(30) Priorité: 09.01.2002 FR 0200221
(43) Date de publication de la demande: 08.10.2003
(73) Titulaire: Brunone, René, 27950 Saint-Marcel (FR)
(72) Inventeur: Brunone, René, 27950 Saint-Marcel (FR)
(74) Mandataire: Blot, Philippe Robert Emile

(56) Documents cités:
- CA-A- 1 091 627
- DE-C- 898 583
- DE-C- 920 476
- GB-A- 588 071
- GB-A- 983 182
- US-A- 3 019 890
- US-A- 4 206 840

## Description

La présente invention concerne une installation mobile de convoyage du type décrit dans le préambule de la revendication 1.

Les exploitations de minerai à ciel ouvert dans lesquelles le minerai est recueilli sur une grande surface nécessitent la mise en oeuvre de moyens d'acheminement du minerai jusqu'à un point de stockage ou de chargement dans des véhicules.

Il est connu de prévoir sur le site d'exploitation une installation de convoyage des minerais. Celle-ci comporte couramment un premier convoyeur, appelé collecteur, disposé le long d'un bord de la zone exploitée. Ce premier convoyeur est fixe pour toute la période d'exploitation de la zone.

Un second convoyeur est disposé transversalement au premier convoyeur. Ce second convoyeur traverse complètement de part en part la zone exploitée. Ce convoyeur est adapté pour transférer les matériaux recueillis dans le sol vers le premier convoyeur au-dessus duquel débouche son extrémité de libération.

Afin de permettre une exploitation de toute la zone à exploiter, le second convoyeur est déplaçable, suivant la longueur du premier convoyeur, afin de se trouver dans la région d'exploitation actuelle. Ce second convoyeur est déplacé transversalement à sa direction de convoyage.

Il est connu que le second convoyeur comporte une succession de châssis de support répartis suivant la longueur de la bande transporteuse du convoyeur. Ces châssis de support sont indépendants et assurent le support de la bande transporteuse (voir par exemple le document DE-C-920476).

Afin de permettre le déplacement du second convoyeur de quelques mètres transversalement suivant sa direction de convoyage, les châssis de support sont tous liés entre eux par un rail reposant sur le sol. Ce rail est constitué par exemple d'un rail de chemin de fer.

Pour assurer le déplacement de chacun des châssis successivement, suivant la longueur du second convoyeur, un engin sollicitant le rail transversalement à sa direction est déplacé suivant la longueur du second convoyeur. Cet engin, constitué par exemple d'un engin de chantier à chenilles comporte un sabot lié rigidement à l'engin. Ce sabot enserre le rail. Il est déplacé suivant la longueur du rail en contraignant le rail à se déplacer progressivement de quelques mètres perpendiculairement à la direction de convoyage du second convoyeur.

Pour permettre un déplacement effectif du second convoyeur, l'engin utilisé doit être très puissant. En effet, celui-ci doit déformer le rail et déplacer celui-ci alors qu'il repose sur le sol. De plus, le poids du convoyeur est très important, notamment du fait du poids du rail, de sorte que la puissance développée par l'engin doit être dimensionnée en conséquence.

L'invention a pour but de proposer une installation de convoyage déplaçable transversalement à la direction de convoyage, et dont le déplacement peut être réalisé à l'aide d'un engin de puissance réduite circulant le long du convoyeur.

A cet effet, l'invention a pour objet une installation de convoyage du type précité, telle que caractérisée dans la partie caractérisante de la revendication 1.

Suivant des modes particuliers de réalisation, l'installation de convoyage comporte l'une ou plusieurs des caractéristiques qui sont l'objet des revendications 2 à 7.

L'invention a également pour objet un procédé de déplacement tel que caractérisé dans la revendication 8.

Suivant un mode particulier de réalisation, le procédé de déplacement comporte les caractéristiques qui font l'objet de la revendication 9.

L'invention sera mieux comprise à la lecture de la description qui va suivre, donnée uniquement à titre d'exemple et faite en se référant aux dessins, sur lesquels :
- la figure 1 est une vue partielle de dessus d'un convoyeur selon l'invention en cours de déplacement ;
- la figure 2 est une vue partielle de côté du convoyeur de la figure 1 ;
- la figure 3 est une vue en bout du convoyeur selon l'invention montrant également la console de traction portée par l'engin assurant le déplacement du convoyeur ; et
- la figure 4 est une vue de dessus d'un détail de la console de traction de l'engin assurant le déplacement du convoyeur.
- la figure 5 est une vue partielle de dessus d'un second convoyeur selon l'invention en cours de déplacement.
- la figure 6 est une vue en coupe selon le plan VI - VI du second convoyeur montrant également un second engin assurant le déplacement du convoyeur.

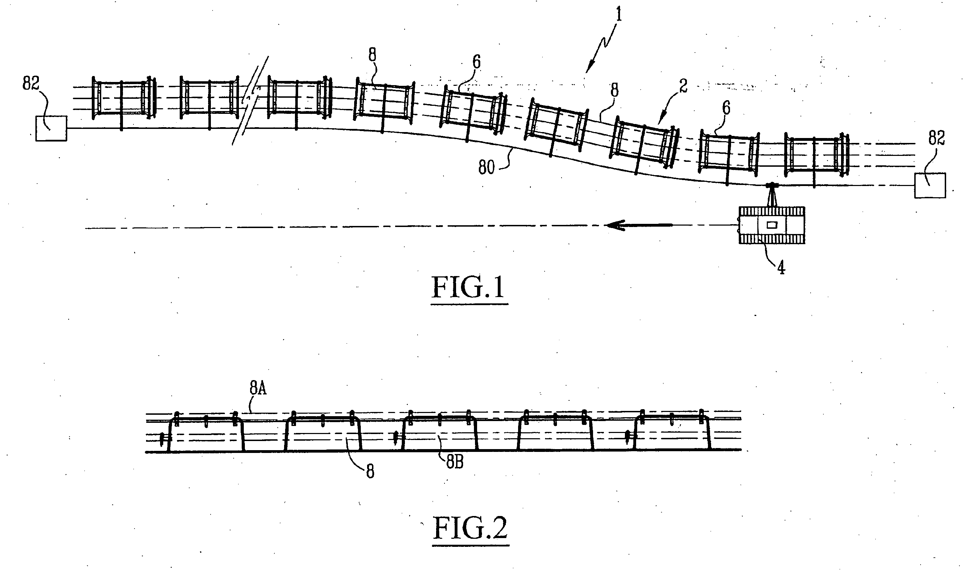

Sur la figure 1 est représentée une installation mobile de convoyage 1. Cette installation comporte un convoyeur à bande 2 déplaçable transversalement au sens de convoyage sous l'action d'un engin 4 se déplaçant suivant la longueur du convoyeur.

Le convoyeur 2 comporte essentiellement un ensemble de châssis de support 6 indépendants disposés successivement à la suite les uns des autres et une bande transporteuse 8 supportée par ces châssis. La bande 8 est représentée en trait mixte sur la figure 1 ou 2 pour plus de clarté.

La bande transporteuse est repliée pour former une boucle. Cette boucle est maintenue à chaque extrémité par des cylindres de renvoi portés par les châssis de support disposés aux extrémités. L'un des cylindres de renvoi est entraîné en rotation par un moteur pour la mise en mouvement de la bande sur elle-même.

La bande 8 définit, comme illustré sur la figure 2, un brin supérieur 8A pour le transport des produits et un brin inférieur 8B permettant le retour de la bande dans le sens inverse au sens de convoyage des produits.

Chaque châssis de support 6 a une longueur mesurée suivant le sens de circulation de la bande comprise entre 1 m et 2 m. Suivant la longueur du convoyeur, les châssis de support 6 sont répartis régulièrement et ceux-ci sont espacés, par exemple de 1 à 2 m.

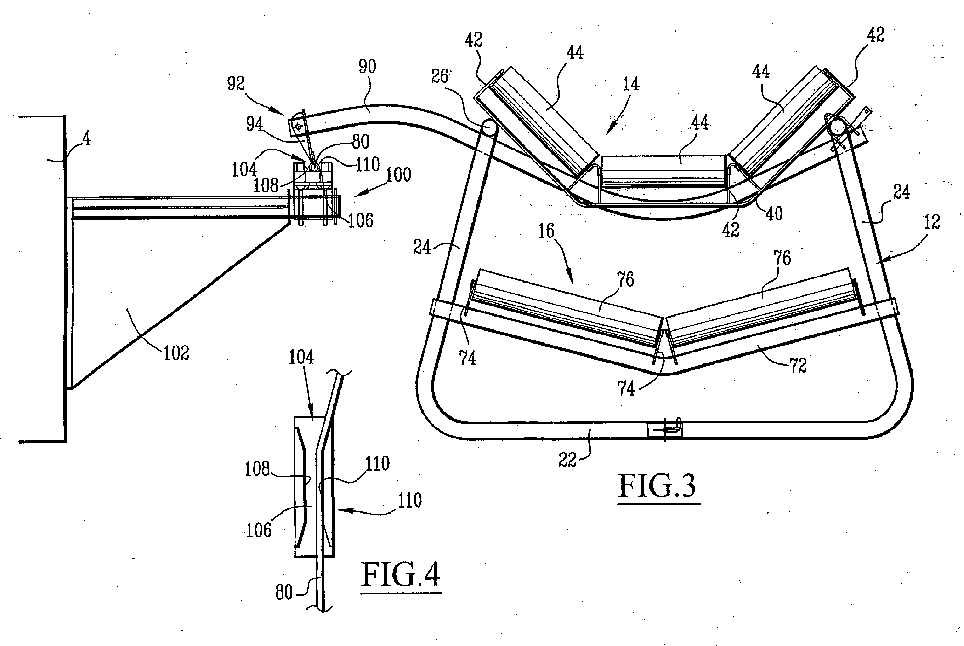

Un châssis de support 6 est représenté seul à plus grande échelle sur la figure 3. Il comporte un bâti 12 adapté pour reposer sur le sol, deux berceaux 14 de guidage du brin supérieur 8A de la bande et, éventuellement, un berceau 16 de guidage du brin inférieur 8B de la bande.

Le bâti 12 est constitué d'un cadre filiforme. Il comporte deux tronçons 22 d'appui sur le sol. Ces deux tronçons sont prolongés, à leurs extrémités, par des jambes 24 sensiblement verticales. Les deux jambes 24 disposées d'un même côté de la bande sont reliées l'une à l'autre par une poutre longitudinale 26 sensiblement horizontale supportant les berceaux de guidage supérieurs 14. Ces poutres s'étendent parallèlement à la direction d'avancement de la bande.

Les tronçons d'appui 22 de chaque élément de structure s'étendent parallèlement l'un à l'autre. Ils sont symétriques l'un de l'autre par rapport à un plan médian s'étendant transversalement au sens d'avancement de la bande.

Les tronçons d'appui 22 et les jambes 24 associées délimitent entre eux un angle légèrement inférieur à 90°, cet angle étant par exemple égal à environ 80°.

L'angle formé entre les jambes 24 et la poutre longitudinale 26 est légèrement supérieure à 90° et est par exemple égal à 95°.

Les jambes 24 sont généralement convergentes l'une vers l'autre chacune depuis leur extrémité inférieure reliée à un tronçon d'appui 22 jusqu'à leur extrémité supérieure reliée à une poutre 26.

Les berceaux supérieurs 14 de guidage de la bande sont au nombre de deux pour chaque châssis de support. Ils s'étendent transversalement au sens de circulation de la bande et sont disposés au voisinage des extrémités du bâti 12. Chaque berceau de guidage 14 repose seulement sur les deux poutres longitudinales 26. II est immobilisé par rapport à celles-ci.

Plus précisément, les berceaux supérieurs de guidage 14 comportent chacun un châssis 40 constitué d'une cornière coudée s'étendant transversalement par rapport au sens de déplacement de la bande d'une poutre longitudinale 26 à l'autre.

Le châssis 40 comporte, sur sa surface supérieure, des pattes 42 portant trois rouleaux rotatifs 44 disposés suivant la largeur du châssis 40. Les rouleaux 44 définissent une surface d'appui en creux pour la bande du convoyeur.

Certains seulement des châssis de support 12 comportent un berceau de guidage 16 du brin inférieur 8B de la bande du convoyeur. En particulier, un châssis de support sur deux est équipé d'un tel berceau 16.

Ce berceau inférieur 16 est constitué d'un châssis de support tubulaire 70 portant deux rouleaux rotatifs 72 supportés par des pattes 74. Les extrémités du châssis de support 70 sont liées aux jambes 24, sensiblement dans la partie médiane de ces jambes.

Afin de permettre le déplacement du convoyeur 2, celui-ci est équipé d'un lien longiligne 80 disposé suivant la longueur de la bande transporteuse. Chacun des châssis de support 6 est relié au lien filiforme 80 pour son déplacement transversal à la longueur du convoyeur.

Ce lien longiligne est constitué d'un brin souple filiforme formé par exemple d'un câble métallique ou d'une chaîne. De préférence, ce brin souple filiforme est constitué d'un câble

L'expression "brin souple filiforme" désigne tout brin susceptible d'être facilement déformé et qui présente une faible rigidité, de sorte que celui-ci puisse être par exemple enroulé sur lui-même.

Le câble 80 est ancré à chacune de ses extrémités afin que celles-ci soient immobilisées par rapport au sol. A cet effet, les extrémités du câble sont solidarisées à des corps morts 82 reposant sur le sol ou à des pieux enfoncés dans le sol.

En outre, le câble 80 est maintenu sous tension en étant retenu à ses deux extrémités. Cette tension est telle que le câble s'étend suivant un trajet présentant en chaque point un grand rayon de courbure et qui est dépourvu de zone de relâchement du câble. En particulier, le câble est maintenu généralement tendu entre les châssis de support successifs. Pour assurer sa tension, le câble 80 est avantageusement équipé de tire-forts.

Comme illustré sur la figure 3, le câble s'étend le long de l'alignement des châssis en étant espacé latéralement de la bande transporteuse. A cet effet, chaque châssis de support comporte un bras 90 à une extrémité 92 duquel le câble 80 est fixé. Ce bras est solidarisé au bâti 12, de préférence dans la partie supérieure de celui-ci afin que le câble 80 soit maintenu au-dessus du sol et à l'écart de celui-ci. Plus précisément, le bras 90 est lié aux poutres longitudinales 26 dans la partie médiane de celles-ci, de sorte que le bras 90 s'étend généralement au centre de chaque châssis de support.

A l'extrémité 92, le câble 80 est relié par une patte de fixation 94 de sorte que le câble 80 s'étend au-dessous du bras 90.

L'engin 4, adapté pour le déplacement du convoyeur 2, porte un organe 100 de sollicitation transversale du convoyeur, et plus précisément du câble 80 reliant les châssis de support.

Cet organe de sollicitation 100 illustré sur les figures 3 et 4 est fixé à l'extrémité d'une console 102 elle-même solidarisée à un flanc de l'engin.

L'organe de sollicitation transversale, représenté seul en vue de dessus sur la figure 4, est constitué d'une chape 104 délimitant généralement un canal dans lequel circule le câble 80.

Ce canal présente un fond 106 bordé latéralement par deux flancs latéraux 108, 110 s'étendant généralement parallèlement l'un à l'autre dans leur partie médiane et présentant des profils divergents vers leurs extrémités. Les flancs 108, 110 s'étendent suivant le sens d'avancement de l'engin.

Le fond 106 et les flancs latéraux 108, 110 sont adaptés pour un glissement du câble 80, notamment en appui sur le fond 106 et contre le flanc extérieur 110.

Afin d'assurer un appui constant du câble 80 sur le fond 106, la console 102 est disposée sur le véhicule, de sorte que l'organe 100 de sollicitation transversale, et notamment le fond 106 de la chape, s'étendent à un niveau supérieur au niveau normal du câble supporté par les châssis de support 12 reposant sur le sol.

Le déplacement du convoyeur s'effectue de la manière suivante.

Tel qu'illustré sur les figures 1 et 3, l'engin 4 est mobile le long du convoyeur du côté où est disposé le câble. Cet engin 4 avance suivant une trajectoire rectiligne parallèle à la direction d'implantation souhaitée pour le convoyeur. Le câble 80 est engagé dans la chape 104. Lors de l'avancement de l'engin 4, le câble 80 est progressivement tiré latéralement afin de pouvoir circuler dans la chape 104. Du fait de la tension du câble, imposée par les ancrages d'extrémité 82, les châssis de support 16 solidarisés au câble sont entraînés avec le câble et sont progressivement amenés à se déplacer latéralement pour être rapprochés de l'engin en mouvement.

Ainsi, le convoyeur se trouve progressivement déplacé transversalement à la direction de convoyage, au fur et à mesure de la progression de l'engin.

Dans la mesure où la chape 100 est située à un niveau supérieur au niveau normal du câble, les châssis de support sont soulevés par l'intermédiaire du bras 90, lors du passage de l'engin 4. Ils ne reposent alors plus que sur les extrémités des surfaces d'appui 22 opposées au câble. Ainsi, les châssis de support glissent sur le sol, les extrémités du châssis sur laquelle ils reposent constituant des patins de glissement.

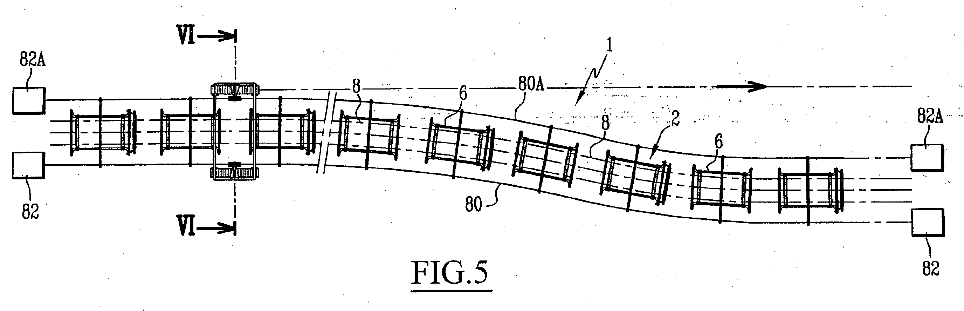

En variante, un second convoyeur 2A et un second engin de déplacement 4A sont représentés sur la figure 5. A la différence du premier convoyeur 2, le convoyeur 2A représenté figure 5 est muni d'un second câble 80A disposé suivant la longueur de la bande transporteuse, sur le côté opposé au premier câble 80.

Le second câble 80A est par ailleurs ancré dans le sol à ses extrémités par des corps morts 82A reposant sur le sol ou par des pieux enfoncés dans le sol.

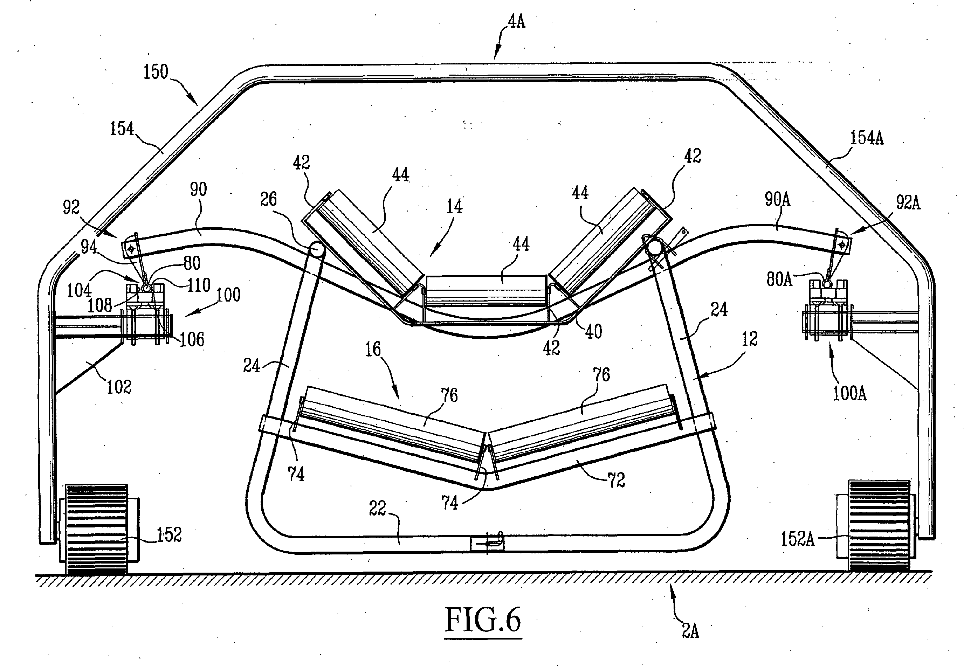

Comme illustré sur la figure 6, le second câble 80A est fixé à une extrémité 92A d'un second bras 90A de support du châssis de support 12.

Le second engin 4A comprend un portique 150, muni de deux jambes 154 et 154A d'écartement supérieur à la largeur du convoyeur 2A. Ainsi, l'engin 4A est adapté pour chevaucher le convoyeur 2A. Les jambes 154 et 154A du portique 150 comportent, à leur base, des chenilles 152, 152A pour assurer le déplacement de l'engin 4A le long du convoyeur 2A.

En outre, les jambes 154 et 154A comprennent chacune un organe de sollicitation 100, 100A respectivement de l'un et l'autre des câbles 80, 80A du convoyeur. Ces organes de sollicitation 100, 100A sont analogues à ceux représentés sur les figures 3 et 4. Comme précédemment, les organes de sollicitation 100, 100A s'étendent à un niveau supérieur au niveau normal des câbles 80, 80A supportés par les châssis de support 12 reposant sur le sol. Par ailleurs, ces organes de sollicitation 100, 100A sont disposés en regard l'un de l'autre.

Le déplacement du convoyeur s'effectue de la manière suivante. Tel qu'illustré sur la figure 5, l'engin 4A est disposé chevauchant le convoyeur 2A. Cet engin 4A avance suivant une trajectoire rectiligne parallèle à la direction d'implantation souhaitée pour le convoyeur 2A. Les câbles 80, 80A sont engagés dans les organes de sollicitation 100,100A.

Dans la mesure où ces organes 100, 100A sont situés à un niveau supérieur au niveau normal des câbles 80, 80A et en regard l'un de l'autre, les châssis de support 6 sont soulevés à l'écart du sol par l'intermédiaire des bras 90, 90A lors du passage de l'engin 4. Du fait de la tension du câble, les châssis de support 6, solidarisés aux câbles 80, 80A sont entraînés avec les câbles 80, 80A et sont progressivement amenés à se déplacer latéralement suivant la direction de déplacement de l'engin en mouvement.

On conçoit que, du fait de l'utilisation d'au moins un brin souple filiforme, constitué par exemple d'un câble, ce brin souple filiforme étant maintenu tendu par ancrage à ses deux extrémités, la structure du convoyeur est très légère, permettant ainsi un déplacement transversal du convoyeur sous l'action d'un engin de faible puissance.

De plus, chaque châssis de support étant partiellement ou totalement soulevé lors de son déplacement latéral, le déplacement du châssis se trouve favorisé par une réduction des frottements, ce qui réduit encore la puissance nécessaire pour le déplacement du convoyeur.

## Revendications

1. Installation mobile de convoyage (1) comportant :
- un convoyeur (2 ; 2A) du type comportant :
• un ensemble de châssis de support (6) indépendants adaptés pour reposer sur le sol et disposés successivement suivant la longueur du convoyeur;
• une bande transporteuse (8) portée par lesdits châssis de support (6) ; et
• au moins un même lien longiligne (80 ; 80A) disposé suivant la longueur du convoyeur et auquel est relié chaque châssis de support (6) pour son déplacement transversalement à la longueur du convoyeur ;
- et un engin (4 ; 4A) autopropulsé pour le déplacement du convoyeur (2 ; 2A) transversalement à sa longueur, lequel engin (4 ; 4A) comporte au moins un organe (100 ; 100A) de sollicitation transversale du ou de chaque lien longiligne (80 ; 80A) lors du mouvement de l'engin (4 ; 4A) suivant la longueur du convoyeur, le ou chaque organe de sollicitation transversale (100 ; 100A) étant propre à coulisser le long du lien longiligne (80 ; 80A) associé et à assurer son guidage ;
**caractérisée en ce que** le ou chaque lien longiligne comporte un brin souple filiforme (80 ; 80A) auquel sont reliés lesdits châssis de support (6), et le ou chaque brin souple filiforme (80 ; 80A) comporte, à chaque extrémité, des moyens d'ancrage (82 ; 82A) pour l'immobilisation des extrémités du brin souple filiforme (80 ; 80A) par rapport au sol et son maintien sous tension.

2. Installation selon la revendication 1, **caractérisée en ce que** ledit organe (100 ; 100A) de sollicitation transversale du ou de chaque brin souple filiforme (80 ; 80A) comporte une chape (104) dans laquelle est engagé ledit brin souple filiforme (80 ; 80A).

3. Installation selon la revendication 1 ou 2, **caractérisée en ce que** le ou chaque organe de sollicitation transversale (100 ; 100A) est disposé sur ledit engin (4 ; 4A) à un niveau supérieur au niveau du brin souple filiforme (80 ; 80A) associé lorsque les châssis de support (6) reposent sur le sol, et **en ce que** le ou chaque organe de sollicitation transversale (100 ; 100A) comporte une surface de support (106) sur laquelle repose le brin filiforme (80 ; 80A) associé assurant ainsi un soulèvement au moins partiel des châssis de support (6) lors du passage du ou de chaque organe de sollicitation transversale (100 ; 100A).

4. Installation selon l'une quelconque des revendications précédentes, **caractérisée en ce que** le convoyeur (2A) comporte deux brins souples filiformes (80, 80A) disposés sur des côtés opposés (92 ; 92A) du convoyeur (2A) et **en ce que** ledit engin (4A) comprend un organe de sollicitation (100 ; 100A) pour chaque brin souple filiforme (80, 80A).

5. Installation selon la revendication 4, **caractérisée en ce que** l'engin (4A) comprend un portique (150) chevauchant le convoyeur (2A) et muni d'au moins deux jambes (154 ; 154A) dont l'écartement est supérieur à la largeur du convoyeur (2A), chaque jambe (154 ; 154A) étant équipée, à sa base, de moyens de roulement (152 ; 152A) sur le sol.

6. Installation selon la revendication 5, **caractérisée en ce que** les organes de sollicitation (100 ; 100A) sont adaptés pour soulever au moins un châssis de support (6) à l'écart du sol lors du passage de l'engin (4).

7. Installation selon l'une des revendications 1 à 3, **caractérisée en ce que** le convoyeur (2) comporte un unique brin souple filiforme (80) et **en ce que** ledit engin (4) comprend un unique organe de sollicitation (100) pour ce brin souple filiforme (80).

8. Procédé de déplacement d'un convoyeur à bande (2 ; 2A) comportant :
- un ensemble de châssis de support (6) indépendants adaptés pour reposer sur le sol et disposés successivement suivant la longueur du convoyeur (2 ; 2A) ; et
- une bande transporteuse (8) portée par lesdits châssis de support (6),
**caractérisé en ce qu'**il comprend les étapes de :
- relier lesdits châssis de support (6) par au moins un brin souple filiforme (80 ; 80A) disposé suivant la longueur ;
- ancrer chaque extrémité du ou de chaque brin souple filiforme (80 ; 80A) pour l'immobilisation de ses extrémités par rapport au sol et son maintien sous tension ; et
- solliciter transversalement le ou chaque brin souple filiforme (80 ; 80A) successivement suivant toute sa longueur depuis un engin (4 ; 4A) circulant suivant la longueur du convoyeur pour provoquer le déplacement transversal progressif des châssis de support (6) lors de l'avancement de l'engin (4 ; 4A).

9. Procédé selon la revendication 8, **caractérisé en ce qu'**il comprend en outre l'étape de soulever au moins partiellement les châssis de support (6) lors du passage de l'engin (4 ; 4A).

## Claims

1. Movable conveying installation (1) comprising:
- a conveyor (2; 2A) of the type comprising:
• a set of independent supporting chassis (6) adapted to rest on the ground and disposed in succession along the length of the conveyor;
• a conveyor belt (8) carried by the said supporting chassis (6); and
• at least one common slender link (80; 80A) which is disposed along the length of the conveyor and to which each supporting chassis (6) is connected for its displacement transversely to the length of the conveyor;
- and a self-propelled device (4; 4A) for the displacement of the conveyor (2; 2A) transversely to its length; the said device (4; 4A) comprises at least one component (100; 100A) for exerting a transverse load on the slender link, or on each slender link, (80; 80A) when the device (4; 4A) moves along the length of the conveyor, the component, or each component, (100; 100A) for exerting a transverse load being suitable for sliding along the associated slender link (80; 80A) and for guiding it; **characterised in that** the slender link, or each slender link, comprises a thread-like flexible strand (80; 80A) to which the said supporting chassis (6) are connected, and the thread-like flexible strand, or each thread-like flexible strand, (80; 80A) comprises, at each end, anchoring means (82; 82A) for immobilising the ends of the thread-like flexible strand (80; 80A) in relation to the ground and keeping it under tension.

2. Installation according to claim 1, **characterised in that** the said component (100; 100A) for exerting a transverse load on the thread-like flexible strand, or on each thread-like flexible strand, (80; 80A) comprises a clevis (104) in which the said thread-like flexible strand (80; 80A) is inserted.

3. Installation according to claim 1 or 2, **characterised in that** the component, or each component, (100; 100A) for exerting a transverse load is disposed on the said device (4; 4A) at a level higher than the level of the associated thread-like flexible strand (80; 80A) when the supporting chassis (6) are resting on the ground, and **in that** the component, or each component, (100; 100A) for exerting a transverse load comprises a supporting surface (106) on which the associated thread-like strand (80; 80A) rests, thus ensuring at least partial lifting of the supporting chassis (6) when the component, or each component, (100; 100A) for exerting a transverse load passes by.

4. Installation according to any of the preceding claims, **characterised in that** the conveyor (2A) comprises two thread-like flexible strands (80; 80A) disposed on opposite sides (92; 92A) of the conveyor (2A), and **in that** the said device (4A) comprises a load-exerting component (100; 100A) for each thread-like flexible strand (80; 80A).

5. Installation according to claim 4, **characterised in that** the device (4A) comprises a gantry (150) which straddles the conveyor (2A) and is provided with at least two legs (154; 154A), the distance between which is greater than the width of the conveyor (2A), each leg (154; 154A) being equipped, at its base, with means (152; 152A) for rolling along the ground.

6. Installation according to claim 5, **characterised in that** the load-exerting components (100; 100A) are adapted to lift at least one supporting chassis (6) away from the ground when the device (4) passes by.

7. Installation according to one of claims 1 to 3, **characterised in that** the conveyor (2) comprises a single thread-like flexible strand (80), and **in that** the said device (4) comprises a single load-exerting component (100) for the said thread-like flexible strand (80).

8. Method of displacing a belt conveyor (2; 2A) comprising:
- a set of independent supporting chassis (6) adapted to rest on the ground and disposed in succession along the length of the conveyor (2; 2A); and
- a conveyor belt (8) carried by the said supporting chassis (6);
**characterised in that** it comprises the stages of:
- connecting the said supporting chassis (6) by at least one thread-like flexible strand (80; 80A) disposed along the length;
- anchoring each end of the thread-like flexible strand, or of each thread-like flexible strand, (80; 80A) for the purpose of immobilising its ends in relation to the ground and keeping it under tension; and
- exerting a transverse load on the thread-like flexible strand, or on each thread-like flexible strand, (80; 80A) in succession along the whole of its length from a device (4; 4A) which moves along the length of the conveyor in order to bring about the progressive transverse displacement of the supporting chassis (6) when the device (4; 4A) advances.

9. Method according to claim 8, **characterised in that** it further comprises the stage of lifting the supporting chassis (6), at least partially, when the device (4; 4A) passes by.

## Patentansprüche

1. Mobile Fördervorrichtung (1) umfassend:
- einen Förderer (2; 2A) des Typs, der folgendes umfasst:
• eine Einheit von unabhängigen Traggestellen (6), die zum Aufliegen auf dem Boden ausgelegt und nacheinander entlang der Länge des Förderers angeordnet sind;
• ein von den Traggestellen (6) getragenes Transportband (8); und
• mindestens ein gleiches Langband (80; 80A), das entlang der Länge des Förderers angeordnet ist und mit dem jedes Traggestell (6) für seine Verschiebung quer zur Länge des Förderers verbunden ist;
- und ein Selbstantriebgerät (4, 4A) zur Verschiebung des Förderers (2, 2A) quer zu seiner Länge, wobei das Gerät (4, 4A) mindestens ein Querlastelement (100, 100A) des oder eines jeden Langbandes (80; 80A) während der Bewegung des Geräts (4; 4A) entlang der Länge des Förderers umfasst, wobei das oder jedes Querlastelement (100; 100A) typischerweise entlang des zugehörigen Langbandes (80; 80A) gleitet und seine Führung gewährleistet;
**dadurch gekennzeichnet, dass** das oder jedes Langband einen biegsamen fadenförmigen Strang (80; 80A) umfasst, mit dem die Traggestelle (6) verbunden sind, und der oder jeder fadenförmige Strang (80; 80A) an jedem Ende Verankerungsmittel (82; 82A) zur Immobilisierung der Enden des biegsamen fadenförmigen Strangs (80; 80A) bezüglich des Bodens und zu dessen Halten unter Spannung umfasst.

2. Vorrichtung nach Anspruch 1, **dadurch gekennzeichnet, dass** das Querlastelement (100; 100A) des oder eines jeden biegsamen fadenförmigen Strangs (80; 80A) eine Abdeckung (104) umfasst, in die der biegsame fadenförmige Strang (80; 80A) eingreift.

3. Vorrichtung nach Anspruch 1 oder 2, **dadurch gekennzeichnet, dass** das oder jedes Querlastelement (100; 100A) an der Vorrichtung (4; 4A) auf einer Höhe oberhalb der Höhe des dazugehörigen biegsamen fadenförmigen Strangs (80; 80A) angeordnet ist, wenn die Traggestelle (6) auf dem Boden aufliegen, und **dadurch**, dass das oder jedes Querlastelement (100; 100A) eine Trägerfläche (106) umfasst, auf der der zugehörige fadenförmige Strang (80; 80A) aufliegt, der somit eine zumindest partielle Anhebung der Traggestelle (6) während des Passierens des oder jedes Querlastelements (100; 100A). sicherstellt.

4. Vorrichtung nach einem der vorhergehenden Ansprüche, **dadurch gekennzeichnet, dass** der Förderer (2A) zwei biegsame fadenförmige Stränge (80; 80A) umfasst, die auf gegenüberliegenden Seiten (92; 92A) des Förderers (2A) angeordnet sind, und **dadurch**, dass das Gerät (4A) ein Lastelement (100; 100A) für jeden biegsamen fadenförmigen Strang (80; 80A) umfasst.

5. Vorrichtung nach Anspruch 4, **dadurch gekennzeichnet, dass** das Gerät (4A) eine Brücke (150) umfasst, die sich über den Förderer (2A) spannt und mit mindestes zwei Streben (154; 154A) versehen ist, deren Abstand größer ist als die Breite des Förderers (2A), wobei jede Strebe (154; 154A) an ihrer Basis mit Mitteln zum Rollen (152; 152A) auf dem Boden ausgestattet ist.

6. Vorrichtung nach Anspruch 5, **dadurch gekennzeichnet, dass** die Lastelemente (100; 100A) dazu ausgelegt sind, mindestens ein Traggestell (6) während des Passierens des Geräts (4) vom Boden anzuheben.

7. Vorrichtung nach einem der Ansprüche 1 bis 3, **dadurch gekennzeichnet, dass** der Förderer (2) einen einzigen biegsamen fadenförmigen Strang (80) umfasst und dass das Gerät (4) ein einziges Lastelement (100; 100A) für diesen biegsamen fadenförmigen Strang (80) umfasst.

8. Verfahren zur Verschiebung eines Bandförderers (2; 2A), umfassend:
- eine Einheit von unabhängigen Traggestellen (6), die zum Aufliegen auf dem Boden ausgelegt und nacheinander entlang der Länge des Förderers angeordnet sind; und
- ein von den Traggestellen (6) getragenes Transportband (8);
**dadurch gekennzeichnet, dass** es die folgenden Schritte umfasst:
- Verbinden der Tragestelle (6) mit mindestens einem biegsamen fadenförmigen Strang (80; 80A), der entlang der Länge angeordnet ist;
- Verankern von jedem Ende des oder eines jeden biegsamen fadenförmigen Strangs (80; 80A) zur Immobilisierung seiner Enden bezüglich des Bodens und zu dessen Halten unter Spannung; und
- aufeinanderfolgendes Querbelasten des oder eines jeden biegsamen fadenförmigen Strangs (80; 80A) entlang seiner gesamten Länge bis zu einem zirkulierenden Gerät (4; 4A), das entlang der Länge des Förderers zirkuliert, um die schrittweise Querverschiebung der Traggestelle (6) während des Vorschubs des Geräts (4; 4A) zu bewirken.

9. Verfahren nach Anspruch 8, **dadurch gekennzeichnet, dass** es weiterhin den Schritt des zumindest teilweisen Anhebens der Traggestelle (6) während des Passierens des Geräts (4; 4A) umfasst.
